# EUROPEAN PATENT SPECIFICATION

(11) **EP 1 668 630 B1**
(45) Date of publication and mention of the grant of the patent: **23.10.2013**
(21) Application number: 04784432.9
(22) Date of filing: 17.09.2004
(51) Int. Cl.: G10L 13/06, G10L 13/10

(54) **IMPROVEMENTS TO AN UTTERANCE WAVEFORM CORPUS**
VERBESSERUNGEN AN EINEM ÄUSSERUNGS-SIGNALFORM-KORPUS
AMELIORATIONS RELATIVES A UN CORPUS DE FORMES D'ONDES D'ENONCE

(30) Priority: 29.09.2003 CN 03134795
(43) Date of publication of application: 14.06.2006
(73) Proprietor: Nuance Communications, Inc., Burlington, MA 01803 (US)
(72) Inventor: ZU, Yi-Qing, Shanghai (CN); HUANG, Jian-Cheng, Shanghai 200060 (CN)
(74) Representative: McLeish, Nicholas Alistair Maxwell
(86) International application number: PCT/US2004/030569
(87) International publication number: WO 2005/034084

(56) References cited:
- WO-A-00/30069
- WO-A-00/55842
- WO-A-2004/012183
- US-A- 5 384 893
- US-A- 5 774 855
- US-A- 6 144 939
- US-A1- 2002 128 841
- BLACK A W ET AL: "AUTOMATICALLY CLUSTERING SIMILAR UNITS FOR UNIT SELECTION IN SPEECH SYNTHESIS" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE : ESCA, FR, vol. VOL. 2 OF 5, 22 September 1997 (1997-09-22), pages 601-604, XP001003966

## Description

### FIELD OF THE INVENTION

The present invention relates generally to Text-To-Speech (TTS) synthesis. The invention is particularly useful for, but not necessarily limited to, determining an appropriate synthesized pronunciation of a text segment using an improved utterance waveform corpus.

### BACKGROUND OF THE INVENTION

Text to Speech (TTS) conversion, often referred to as concatenated text to speech synthesis, allows electronic devices to receive an input text string and provide a converted representation of the string in the form of synthesized speech. However, a device that may be required to synthesize speech originating from a non-deterministic number of received text strings will have difficulty in providing high quality realistic synthesized speech. That is because the pronunciation of each word or syllable (for Chinese characters and the like) to be synthesized is context and location dependent. For example, a pronunciation of a word at the end of a sentence (input text string) may be drawn out or lengthened. The pronunciation of the same word may be lengthened even more if it occurs in the middle of a sentence where emphasis is required.

In most languages the pronunciation of a word depends on acoustic prosodic parameters comprising tone (pitch), volume (power or amplitude) and duration. The prosodic parameter values for a word are dependent upon word position in a phrase. One TTS approach is to identify matching text strings with a sufficiently long utterance in the corpus. However, this approach is computationally expensive, requires an unacceptably large corpus for most applications and there is no guarantee of finding a suitable matching utterance in the corpus.

Another approach employs a relatively small corpus and clustering of acoustic units (phonemes) representative of similar prosodic parameters. This approach is relatively computationally efficient but does not suitably address the problem of prosodic variations due to word position in a phrase.

In this specification, including the claims, the terms 'comprises', 'comprising' or similar terms are intended to mean a non-exclusive inclusion, such that a method or apparatus that comprises a list of elements does not include those elements solely, but may well include other elements not listed.

PCT patent application publication no. WO 00/30069 describes a high quality speech synthesizer which concatenates speech waveforms reference by a large speech database. A text processor receives a text input and converts the text input into an input phonetic data sequence which is converted by a target generator into a multi-layer internal data sequence to be synthesized. The internal data sequence is known as extended phonetic transcription (XPT) and includes phonetic descriptors, symbolic descriptors and prosodic descriptors. A waveform selector retrieves from a speech unit database descriptors of candidate speech units that can be concatenated into the target utterance specified by the XPT transcription. Candidate-to-target matching is based on symbolic descriptors and numeric descriptors and determines how well each candidate fits the target specification. The best sequence of candidate speech units is selected for output to the speech waveform concatenator which concatenates the speech units selected forming the output speech that represents the target input text.

### SUMMARY OF THE INVENTION

In accordance with the invention, there is provided a method for providing a representative utterance waveform representing a group of waveforms corresponding to identical words and an electronic device for TTS synthesis as recited in the accompanying independent claims.

Preferred embodiments of the invention are recited in the accompanying dependent claims.

### BRIEF DESCRIPTION OF THE DRAWINGS

In order that the invention may be readily understood and put into practical effect, reference will now be made to a preferred embodiment as illustrated with reference to the accompanying drawings in which:
Fig. 1 is a schematic block diagram of an electronic device used with the present invention;
Fig. 2 is a method 200 for providing a representation of a waveform for a word to be stored in an utterance corpus of Fig. 1; and
Figs 3A to 3C illustrate text strings and marker identifying natural phrase boundaries.

### DETAILED DESCRIPTION OF THE PREFERRED EMBODIMENT OF THE INVENTION

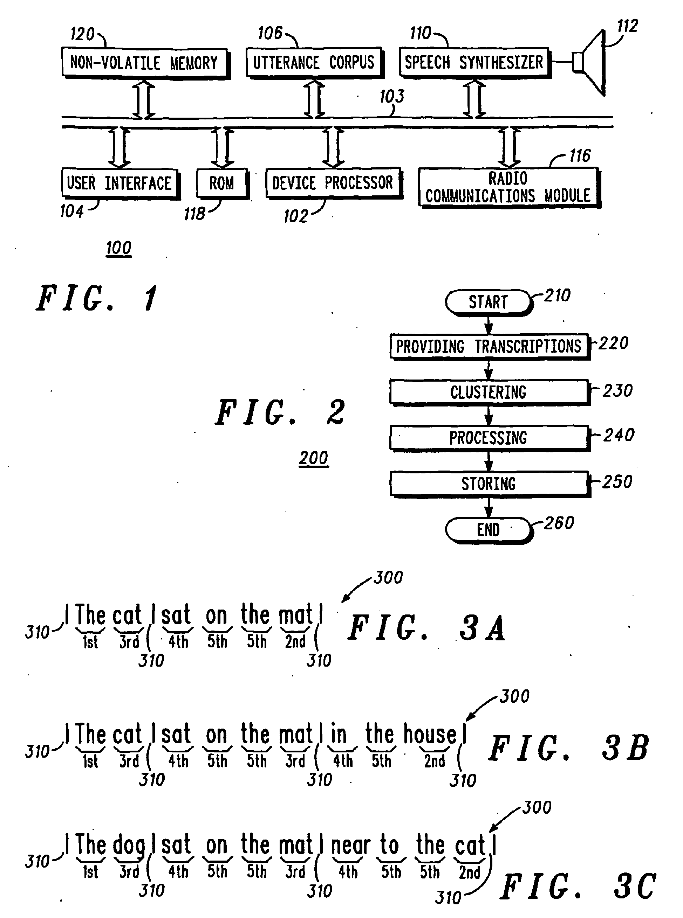

Referring to Fig. 1 there is illustrated an electronic device 100, in the form of a radio-telephone, comprising a device processor 102 operatively coupled by a bus 103 to a user interface 104 that is typically a touch screen or alternatively a display screen and keypad. The electronic device 100 also has an utterance corpus 106, a speech synthesizer 110, Non Volatile memory 120, Read Only Memory 118 and Radio communications module 116 all operatively coupled to the processor 102 by the bus 103. The speech synthesizer 110 has an output coupled to drive a speaker 112. The corpus 106 includes representations of words or phonemes and associated sampled, digitized and processed utterance waveforms PUWs. In other words, and as described below, the Non-Volatile memory 120 (memory module) provides text strings in use for Text-To-Speech (TTS) synthesis (the text may be received by module 116 or otherwise). Also the waveform utterance corpus comprises representative utterance waveforms of clusters of identical words positioned in transcriptions, representing phrases and corresponding sampled and digitized utterance waveforms, at locations relative to the natural phrase boundaries as described below.

As will be apparent to a person skilled in the art, the radio frequency communications unit 116 is typically a combined receiver and transmitter having a common antenna. The radio frequency communications unit 116 has a transceiver coupled to antenna via a radio frequency amplifier. The transceiver is also coupled to a combined modulator/demodulator that couples the communications unit 116 to the processor 102. Also, in this embodiment the non-volatile memory 120 (memory module) stores a user programmable phonebook database Db and Read-Only Memory 118 stores operating code (OC) for device processor 102.

Referring to Figs. 2 and 3A to 3C there is illustrated a method 200 for providing a representation of a waveform for a word, the method 200 after a start step 210 comprises a step 220 of providing a plurality of text strings representing phrases and corresponding sampled and digitized utterance waveforms of the text strings, the text strings having marked natural phrase boundaries 310. These natural phrase boundaries are inserted manually into transcriptions of speech waveforms, the transcriptions being phrases or sentences. Also the sampled and digitized utterance waveforms are typically in the form of feature vectors as will be apparent to a person skilled in the art.

The method 200 then effects a step 230 of clustering parts of the waveforms corresponding to identical words in the transcriptions to provide groups of waveforms for identical words with similar prosodic features, the clustering being effected when the identical words are positioned in the transcription at locations LS relative to the natural phrase boundaries 310. For instance, the transcription 300 of Fig. 3A "| The cat sat on the mat|" has three natural phrase boundaries 310 indicated by the markers"|"; the transcription 300 of Fig. 3B "| The cat | sat on the mat| in the house|" has four natural phrase boundaries and so does the transcription 300 of Fig 3C "|The dog| sat on the mat| next to the cat |". During the step 230 of clustering, the locations LS of the words in the transcription relative to the natural phrase boundaries 310 are groupe into one of five positions such that there are five potential clusters for the identical words. A first (1^{st}) one of the positions is at a beginning of the text string. Thus, in the three transcription examples of FIG 3A to 3C. there is an identical word "The" in the first (1^{st}) one of the positions. Other identical words should be found in further transcriptions and all instances of the word "the" in the first (1^{st}) one of the positions words will be grouped together during the step 230 of clustering.

A second (2^{nd}) one of the positions is at an end of the transcription. In the three transcription examples of FIG 3A to 3C there are no identical words (mat, house, cat) and therefore none of these words will be grouped together during the step 230 of clustering. However, identical words in the second (2^{nd}) one of the positions may be found in further transcriptions.

A third (3^{rd}) one of the positions is immediately before and adjacent to the marked natural phrase boundaries 310 between the beginning and end of the transcription. In the three transcription examples of FIG 3A to 3C there are two groups of identical words "cat" and "mat" in the third (3rd) one of the positions. Other identical words should be found in further transcriptions and all instances of the words "cat") in the third (3rd) one of the positions will be grouped together during the step 230 of clustering. The same also applies for the words "mat" and "dog".

A fourth (4th) one of the positions is immediately after and adjacent to the marked natural phrase boundaries 310 between the beginning and end of the transcription. In the three transcription examples of FIG 3A to 3C there is an identical word "sat" in the fourth (4th) one of the positions. Other identical words should be found in further transcriptions and all instances of the word "sat" in the fourth (4th) one of the positions will be grouped together during the step 230 of clustering. The same also applies for the words "in" and "near".

A fifth (5th) one of the positions is any position other than the first, second, third or fourth position in the transcription. In the three transcription examples of FIG 3A to 3C there are identical words "on" and "the" in the fifth (5th) one of the positions. Other identical words should be found in further transcriptions and all instances of the words "on" in the fifth (5th) one of the positions will be grouped together during the step 230 of clustering as will instances of the word "the". The same also applies for the word "to".

After step 230 a step 240 of processing provides for processing each of the groups of waveforms for the identical words to provide a representative utterance waveform thereof. Specifically, the step 240 of processing preferably provides for determining average values of the the waveforms corresponding to identical words to provide a representative utterance waveform thereof The average values are calculated by summing each element in the feature vectors for each cluster and then dividing by the number of feature vectors. For instance, if there were 100 instances of the word "the" identified in the first (1^{st}) position of the text stings then each corresponding element in the feature vector for each of the 100 instances would be summed and then the result would be divided by 100 to obtain a mean value for each feature vector element. Hence, after processing an average sampled digitized waveform SDW representative of the cluster for the word "the" in the first (1^{st}) position of an utterance is stored in the utterance corpus 106 in a storing step 250. The method then ends after all clustering is completed for each word.

Advantageously, the present invention allows for storing average sampled digitized waveforms SDWs representative of a cluster of an associated word. The average sampled digitized waveforms SDWs essentially model acoustic prosodic features for words, wherein parameters of the acoustic prosodic features comprising tone (pitch), volume (power or amplitude) and duration are dependent upon their position in a sentence or phrase relative to the natural phrase boundaries.

The detailed description provides a preferred exemplary embodiment only, and is not intended to limit the scope, applicability, or configuration of the invention. Rather, the detailed description of the preferred exemplary embodiment provides those skilled in the art with an enabling description for implementing the described preferred exemplary embodiment of the invention. It should be understood that various changes may be made in the function and arrangement of elements without departing from the scope of the invention as determined by the appended claims.

## Claims

1. A method for providing a representative utterance waveform representing a group of waveforms corresponding to identical words, the method comprising:
providing (220) a plurality of text strings representing phrases and having marked natural phrase boundaries (310), the plurality of text strings comprising words, the words having locations relative to the natural phrase boundaries;
providing a plurality of sampled and digitized utterance waveforms corresponding to the text strings;
clustering (230) parts of the plurality of sampled and digitized utterance waveforms corresponding to identical words in the plurality of text strings to provide a group of waveforms corresponding to the identical words with similar prosodic features, the clustering being effected when the locations of the identical words are positioned in a same position relative to the natural phrase boundaries; and
processing (240) the group of waveforms corresponding to the identical words to provide the representative utterance waveform by determining average values of the waveforms in the group of waveforms.

2. The method as claimed in claim 1, wherein the locations relative to the natural phrase boundaries are grouped into at least one of five positions such that there are five potential clusters for the identical words.

3. The method as claimed in claim 2, wherein a first one of the positions is at the beginning of any of the plurality of text strings.

4. The method as claimed in claim 2, wherein a second one of the positions is at the end of any of the plurality of text strings.

5. The method as claimed in claim 2, wherein a third one of the positions is immediately before and adjacent to any of the marked natural phrase boundaries between the beginning and end of any of the plurality of text strings.

6. The method as claimed in claim 2, wherein a fourth one of the positions is immediately after and adjacent to any of the marked natural phrase boundaries between the beginning and end of any of the plurality of text strings.

7. The method as claimed in claim 2, wherein a fifth one of the positions is any position other than the first, second, third and fourth position in any of the plurality of text strings.

8. An electronic device (100) for Text-To-Speech (TTS) synthesis comprising:
a processor (102);
a speech synthesizer (110) coupled to the processor;
a memory module (120) coupled to the processor;
an utterance corpus (106) coupled to the processor,
the electronic device (100) being **characterized by**:
the memory module being configured to provide a plurality of text strings representing phrases and having marked natural phrase boundaries (310), the plurality of text strings comprising words, the words having locations relative to the natural phrase boundaries;
the electronic device (100) being configured to:
cluster parts of a plurality of sampled and digitized utterance waveforms corresponding to identical words in the plurality of text strings to provide a group of waveforms corresponding to the identical words with similar prosodic features, the clustering being effected when the locations of the identical words are positioned in a same position relative to the natural phrase boundaries,
process the group of waveforms corresponding to the identical words to provide and store in the utterance corpus (106) a representative utterance waveform by determining average values of the waveforms in the group of waveforms; and
the utterance corpus comprising representative utterance waveforms, each representative utterance waveform representing one of the group of waveforms corresponding to identical words.

## Patentansprüche

1. Verfahren zur Bereitstellung einer repräsentativen Äußerungswellenform, die eine Gruppe von Wellenformen darstellt, die identischen Worten entspricht, wobei das Verfahren folgendes aufweist:
Bereitstellen (220) einer Vielzahl von Textfolgen, die Ausdrücke darstellen und deutliche natürliche Ausdrucksgrenzen (310) aufweisen, wobei die Vielzahl von Textfolgen Worte aufweist, wobei die Worte Positionen relativ zu den natürlichen Ausdrucksgrenzen aufweisen;
Bereitstellen einer Vielzahl von abgetasteten und digitalisierten Äußerungswellenformen, die den Textfolgen entsprechen;
Clusterbildung (230) von Teilen der Vielzahl von abgetasteten und digitalisierten Äußerungswellenformen, die identischen Worten in der Vielzahl von Textfolgen entsprechen, um eine Gruppe von Wellenformen bereitzustellen, die den identischen Worten mit ähnlichen prosodischen Merkmalen entsprechen, **dadurch gekennzeichnet, dass** die Clusterbildung ausgeführt wird, wenn die Positionen der identischen Worte relativ zu den natürlichen Ausdrucksgrenzen identisch sind; und
Verarbeiten (240) der Gruppe von Wellenformen, die den identischen Worten ent-sprechen, zur Bereitstellung der repräsentativen Ausdruckswellenform durch Bestimmen von Durchschnittswerten der Wellenformen in der Gruppe von Wellenformen.

2. Verfahren nach Anspruch 1, wobei die Positionen relativ zu den natürlichen Ausdrucksgrenzen in mindestens eine von fünf Positionen gruppiert werden, so dass es fünf potentielle Cluster für die identischen Worte gibt.

3. Verfahren nach Anspruch 2, wobei sich eine erste Position der Positionen am Anfang einer jeden der Vielzahl von Textfolgen befindet.

4. Verfahren nach Anspruch 2, wobei sich eine zweite Position der Positionen am Ende einer jeden der Vielzahl von Textfolgen befindet.

5. Verfahren nach Anspruch 2, wobei sich eine dritte Position der Positionen unmittelbar vor und benachbart zu einer jeden der deutlichen natürlichen Ausdrucksgrenzen zwischen dem Anfang und dem Ende einer jeden der Vielzahl von Textfolgen befindet.

6. Verfahren nach Anspruch 2, wobei sich eine vierte Position der Positionen unmittelbar nach und benachbart zu einer jeden der deutlichen natürlichen Ausdrucksgrenzen zwischen dem Anfang und dem Ende einer jeden der Vielzahl von Textfolgen befindet.

7. Verfahren nach Anspruch 2, wobei eine fünfte Position der Positionen eine jede Position außer der ersten, zweiten, dritten und vierten Position in einer jeden der Vielzahl von Textfolgen ist.

8. Elektronische Vorrichtung (100) zur Sprachausgabe-für-Text (TTS)-Synthese, die folgendes aufweist:
einen Prozessor (102);
ein Sprachsynthesegerät (110), das mit dem Prozessor verbunden ist;
ein Speichermodul (120), das mit dem Prozessor verbunden ist und dazu ausgestaltet ist, eine Vielzahl von Textfolgen bereitzustellen, die Ausdrücke darstellen und deutliche natürliche Ausdrucksgrenzen (310) aufweisen, wobei die Vielzahl von Textfolgen Worte aufweist, wobei die Worte Positionen relativ zu den natürlichen Ausdrucksgrenzen aufweisen;
einen Äußerungswellenformkorpus (106), der mit dem Prozessor verbunden ist;
wobei die elektronische Vorrichtung (100) zu folgendem ausgestaltet ist:
Clusterbildung von Teilen einer Vielzahl von abgetasteten und digitalisierten in dem Äußerungswellenformkorpus enthaltenen Äußerungswellenformen, die identischen Worten in der Vielzahl von Textfolgen entsprechen, um eine Gruppe von Wellenformen bereitzustellen, die den identischen Worten mit ähnlichen prosodischen Merkmalen entsprechen, **dadurch gekennzeichnet, dass** die elektronische Vorrichtung des Weiteren dazu ausgestaltet ist, die Clusterbildung auszuführen, wenn die Positionen der identischen Worte in einer gleichen Position relativ zu den natürlichen Ausdrucksgrenzen positioniert sind; und zum
Verarbeiten der Gruppe von Wellenformen, die den identischen Worten entsprechen, zur Bereitstellung und Speicherung in dem Äußerungswellenformkorpus einer repräsentativen Äußerungswellenform durch Bestimmen von Durchschnittswerten der Wellenformen in der Gruppe von Wellenformen; und
wobei der Äußerungswellenformkorpus (106) mehr als eine der besagten repräsentativen Äußerungswellenform aufweist.

## Revendications

1. Procédé pour fournir une forme d'onde d'énoncé représentative représentant un groupe de formes d'onde correspondant à des mots identiques, le procédé comprenant :
la fourniture (220) d'une pluralité de chaînes de texte représentant des expressions et ayant des frontières d'expressions naturelles marquées (310), la pluralité de chaînes de texte comprenant des mots, les mots ayant des emplacements par rapport aux frontières d'expressions naturelles ;
la fourniture d'une pluralité de formes d'onde d'énoncé échantillonnées et numérisées correspondant aux chaînes de texte ;
le groupement (230) des parties de la pluralité de formes d'onde d'énoncé échantillonnées et numérisées correspondant à des mots identiques dans la pluralité de chaînes de texte pour fournir un groupe de formes d'onde correspondant aux mots identiques avec des caractéristiques prosodiques similaires,
**caractérisé par**
le groupement effectué lorsque les emplacements des mots identiques par rapport aux frontières d'expressions naturelles sont identiques ; et
le traitement (240) du groupe de formes d'onde correspondant aux mots identiques pour fournir la forme d'onde d'énoncé représentative en déterminant les valeurs moyennes des formes d'onde dans le groupe de formes d'onde.

2. Procédé selon la revendication 1, dans lequel les emplacements par rapport aux frontières d'expressions naturelles sont groupés en au moins l'une de cinq positions, de sorte qu'il existe cinq groupes potentiels pour les mots identiques.

3. Procédé selon la revendication 2, dans lequel une première des positions est au début de l'une quelconque de la pluralité de chaînes de texte.

4. Procédé selon la revendication 2, dans lequel une deuxième des positions est à la fin de l'une quelconque de la pluralité de chaînes de texte.

5. Procédé selon la revendication 2, dans lequel une troisième des positions est immédiatement avant l'une quelconque des frontières d'expressions naturelles marquées et adjacente à celle-ci entre le début et la fin de l'une quelconque de la pluralité de chaînes de texte.

6. Procédé selon la revendication 2, dans lequel une quatrième des positions est immédiatement après l'une quelconque des frontières d'expressions naturelles marquées et adjacente à celle-ci entre le début et la fin de l'une quelconque de la pluralité de chaînes de texte.

7. Procédé selon la revendication 2, dans lequel une cinquième des positions est n'importe quelle position autre que les première, deuxième, troisième et quatrième positions dans l'une quelconque de la pluralité de chaînes de texte.

8. Dispositif électronique (100) pour une synthèse texte vers parole (TTS) comprenant :
un processeur (102) ;
un synthétiseur de parole (110) couplé au processeur ;
un module de mémoire (120) couplé au processeur et configuré pour fournir une pluralité de chaînes de texte représentant des expressions et ayant des frontières d'expressions naturelles marquées (310), la pluralité de chaînes de texte comprenant des mots, les mots ayant des emplacements par rapport aux frontières d'expressions naturelles ;
un corpus de formes d'onde d'énoncé (106) couplé au processeur ;
le dispositif électronique (100) étant configuré pour :
grouper les parties d'une pluralité de formes d'onde d'énoncé échantillonnées et numérisées comprises dans le corpus de formes d'onde d'énoncé correspondant à des mots identiques dans la pluralité de chaînes de texte pour fournir un groupe de formes d'onde correspondant aux mots identiques avec des caractéristiques prosodiques similaires,
**caractérisé par**
le dispositif électronique en outre configuré pour
effectuer le groupement lorsque les emplacements des mots identiques sont à une même position par rapport aux frontières d'expressions naturelles, et pour
traiter le groupe de formes d'onde correspondant aux mots identiques pour fournir et mémoriser, dans le corpus de formes d'onde d'énoncé, une forme d'onde d'énoncé représentative en déterminant les valeurs moyennes des formes d'onde dans le groupe de formes d'onde ; et
le corpus de formes d'onde d'énoncé (106) comprenant plusieurs desdites formes d'onde d'énoncé représentatives.
